# EUROPEAN PATENT SPECIFICATION

(11) **EP 0 468 688 B1**
(45) Date of publication and mention of the grant of the patent: **07.02.1996**
(21) Application number: 91306479.6
(22) Date of filing: 17.07.1991
(51) Int. Cl.: H04B 7/26, H04B 7/155

(54) **Method and apparatus for providing wireless communications between remote locations**
Verfahren und Vorrichtung zur drahtlosen Kommunikation zwischen entfernten Lagen
Méthode et appareil pour établir des communications sans fil entre des endroits éloignés

(30) Priority: 25.07.1990 US 557873
(43) Date of publication of application: 29.01.1992
(73) Proprietor: AT&T Corp., New York, NY 10013-2412 (US)
(72) Inventor: Russell, Jesse Eugene, Piscataway, New Jersey 08854 (US); Zysman, George Isaac, Mendham, New Jersey 07945 (US)
(74) Representative: Buckley, Christopher Simon Thirsk

(56) References cited:
- FR-A- 2 207 395
- PROCEEDINGS OF THE NATIONAL COMMUNICATIONS FORUM. vol. 41, no. 2, 1987, OAKBROOK, ILLINOIS US pages 953 - 956; D.E.KIMZEY: 'Microwave Radio in Cellular
- Radio Systems'
- MIKROWELLEN MAGAZIN vol. 10, no. 6, 1984, COBURG,DE pages 624 - 633; H.RUPP:'Mikrowellensysteme für feste und mobile Funkdienste'
- PATENT ABSTRACTS OF JAPAN vol. 012, no. 465 (E-690)7 December 1988

## Description

In high capacity cellular mobile radiotelephone systems, a plurality of base stations, also referred to as cell sites, are arranged so that each cell site covers a respective geographical area called a cell. Typically, each such cell site contains a radio transmitter-receiver and is directly wired to a mobile telephone switching office (MTSO) which in turn is part of a regional or nationwide network of telephone switching offices. One example of such cell site is the AT&T Series I cell sites (Model 1 and Model 2 architecture) used in the family of AUTOPLEX® cellular telecommunications systems which are commercially available from the American Telephone and Telegraph Company of New York, N.Y. Because of increased demands for more radio channels resulting from a growing cellular customers base, cellular telephone service providers often desire to expand their networks to service an increasing number of subscriber stations within a geographical location.

Various solutions to meet the foregoing need have suggested placing cell site antennas geographically very close to the potential locations of mobile or portable subscriber stations and carrying signals between the cell site and its remote antennas over either coaxial transmission lines or an optical fiber cable network interconnecting the cell site and its antennas. One such microcellular communication system includes optical fiber connections between a cellular base station and a plurality of radio frequency antennas. Such optical fiber links operate satisfactorily for their intended purposes for which they were originally designed. However, due to rapid growth of cellular customer demands combined with the requirements of quickly, reliably and cost-effectively providing cellular service to customers either on a permanent basis or on a temporary one, such as for example in case of emergencies, there exists a need for a more flexible, lower-cost and more easily and quickly expandable communication system than now exists with commercially available equipments.

"Microwave Radio in Cellular Radio Systems", by David E. Kimzey; Proceedings of the National Communications Forum XXXXI (1987) no. II, pp. 953-956: suggests the use of microwave radios as an interconnect medium between cell sites, a mobile telephone switching office and a public switched telephone network interconnect. The microwave interconnect system is presented as providing flexibility and cost advantages in adding new remote cell sites to the system to accommodate increased traffic.

According to one aspect of this invention there is provided a method as claimed in claim 1.

According to another aspect of this invention there is provided apparatus as claimed in claim 2.

A method for receiving wireless communications signals at the main base station from the remote reception and radiation site may comprise the steps of receiving at the microwave antenna of the main base station incoming microwave signals, amplifying the received microwave signals, reducing the frequency of the amplified signals to a substantially lower frequency range of the order of the frequency band of the remote reception and radiation site, amplifying the frequency-reduced signals, modulating the amplified frequency-reduced signals on a radio frequency carrier signal to generate radio frequency signals, and coupling the generated radio frequency signals to a receiver within the main base station.

A method for transmitting from the reception and radiation site a plurality of radio telecommunications signals having predetermined radio frequencies and intended for a plurality of telephone subscriber stations may comprise the steps of receiving at the site incoming microwave signals, reducing the frequencies of the received microwave signals to substantially lower frequencies thereby generating intermediate signals, modulating the intermediate signals on a carrier signal having a frequency selected from the predetermined radio frequencies, and coupling the modulated radio signals to a radio frequency antenna.

A method for processing at the reception and radiation site a plurality of radio telecommunications signals having predetermined radio frequencies may comprise the steps of receiving at the site incoming radio signals, reducing the frequencies of the received radio signals to lower frequencies to generate intermediate signals, modulating the intermediate signals on a microwave frequency carrier signal, and coupling the modulated microwave signals to a microwave frequency antenna.

Transmitting apparatus at the main base station may comprise a frequency downconverter for reducing the frequency of cellular radio signals intended for a mobile subscriber station, and a modulator for modulating the frequency-reduced signals on a microwave carrier for transmission to a remote mobile radio reception and radiation cellular site. Receiving apparatus at the main base station may comprise a frequency downconverter for substantially reducing the frequency of the microwave signals received at the base station, and a modulator for modulating such frequency-reduced signals on a radio frequency carrier signal.

A mobile radio reception and radiation cellular site may comprise a first antenna for receiving/transmitting mobile radio signals having frequencies in a first range of frequencies, a second antenna for receiving/transmitting microwave signals having frequencies in a second range of frequencies that are substantially higher than the frequencies in the first range of frequencies, a frequency converter coupled to the second antenna for substantially reducing the frequencies of received microwave signals thereby generating intermediate signals, a modulator coupled to the frequency converter for modulating the intermediate signals on a radio frequency carrier signal and coupling the modulated radio signals to the first antenna. The site may further comprise a second frequency converter coupled to the first antenna for reducing the frequencies of received mobile radio signals thereby generating second intermediate signals, a second modulator coupled to the second frequency converter for modulating the second intermediate signals on a microwave frequency carrier signal and coupling the modulated microwave signals to the second antenna.

### Brief Description of the Drawings

Further features and advantages of the present invention will become apparent from the following detailed description taken together with the drawings in which:
FIG. 1 is an illustrative configuration of a main base station in wireless communications with a plurality of remote sites;
FIG. 2 is a functional block diagram representation of portions of a main station embodying the invention; and
FIG. 3 is a functional block diagram representation of a remote site.

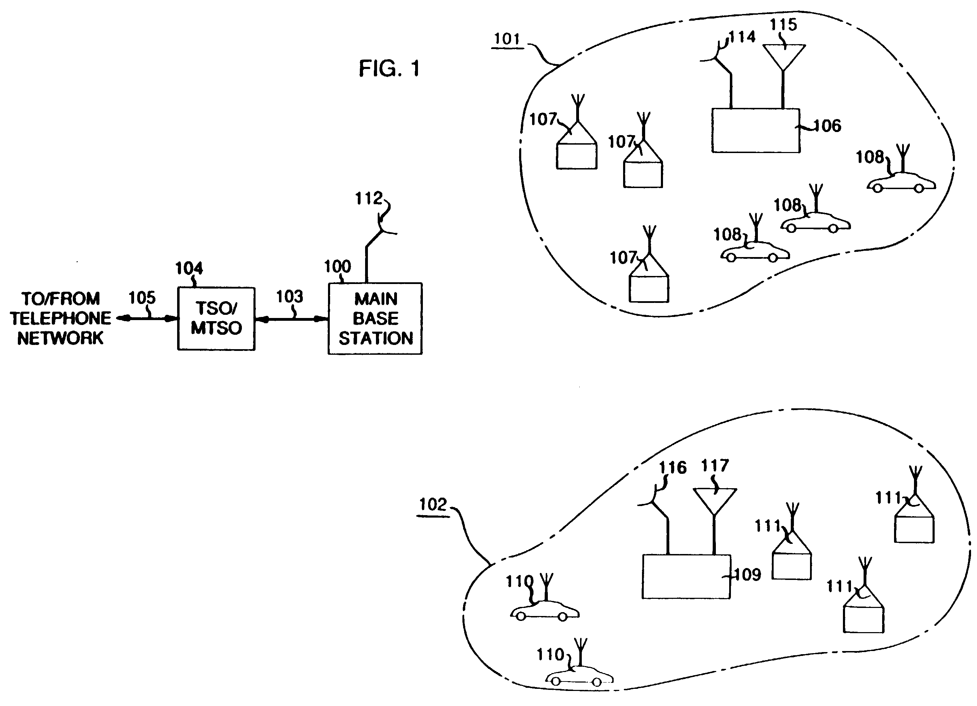

Shown in FIG. 1 is a schematic illustration of a wireless telecommunications system to which the present invention is applied comprising a main base station 100 adapted to transmit and receive communications signals to and from various remote geographical areas or regions, such as regions 101 and 102. The main base station 100 is coupled, via a communication link 103, to a telephone switching office 104, for example, a mobile telephone switching office (MTSO) of a commercially available type. The telephone switching office 104 is in turn connected, via a communication link 105, to the public telephone network. Located within the geographical region 101 is a reception and radiation site 106 designed to receive communications signals from the base station 100 and transmit/radiate signals to a plurality of subscriber telephone stations located within the region 101. The subscriber stations may include several fixed telephone stations, which are illustratively shown as fixed stations 107, and/or a plurality of mobile telephone stations, such as mobile stations 108. Similarly, the region 102 includes a reception and radiation site 109 also adapted to receive incoming signals from the main base station 100 and radiate outgoing signals to various subscriber telephone stations 110 and 111 of a type similar to stations 107 and 108 associated with the region 101.

In order to establish bidirectional communications links between the main base station and the remote sites, the main base station 100 comprises at least one microwave antenna 112 which is adapted to transmit and receive microwave communication signals to and from the remote reception and radiation sites 106 and 109. Alternatively, the main base station 100 may comprise at least two microwave antennas (not shown), one designed as a transmitting antenna and the other as a receiving antenna The remote site 106 includes at least one microwave antenna 114 and at least one radio frequency antenna 115. The microwave antennas 112 and 114 are used to establish a bidirectional microwave link between the main base station 100 and the remote site 106. The radio frequency antenna 115 is used to establish bidirectional radio frequency links between the site 106 and the antennas associated with each subscriber telephone stations 107, 108 to be served within the geographical region 101. Similarly, the reception and radiation remote site 109 comprises at least one microwave antenna 116 and a radio frequency antenna 117. Microwave antennas 112 and 116 are used to establish a bidirectional microwave link between the main base station 100 and the remote site 109 which is intended to serve subscriber telephone stations 110 and 111 within the region 102. Bidirectional radio communications between the site 109 and the subscriber telephone stations 110 and 111 are achieved via the radio frequency antenna 117.

As mentioned above, it is well within the scope of the present invention to replace each of the microwave antennas 112, 114 and 116 with a plurality of microwave antennas depending upon the difference in frequency between transmission and reception microwave signals at the main base station 100 and at each of the remote sites 106 and 109.

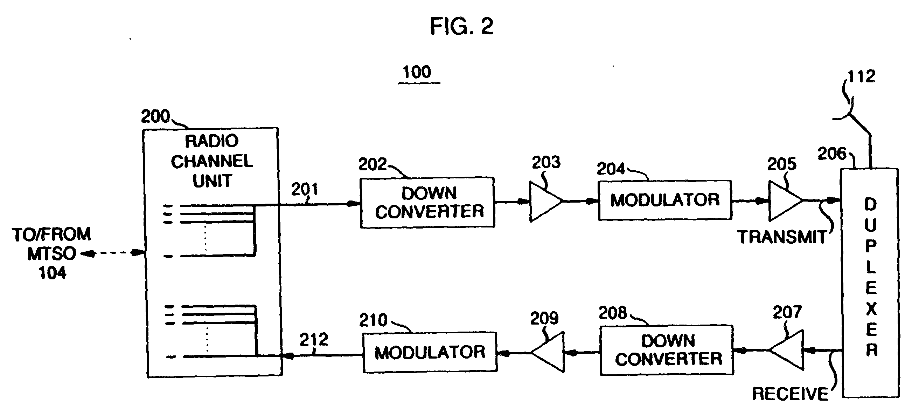

Referring now to FIG. 2, there is shown, in functional block diagram form, only certain portions of the main base station 100 useful in the understanding of one embodiment of the invention. The main base station 100 comprises a transmitter portion and a receiver portion. Communication signals between the MTSO 104 and the various telephone subscriber stations 107, 108, 110 and 111, shown in FIG. 1, are derived from, as well as detected at radio channel units within the main base station 100 of which one such radio channel unit 200 is illustratively shown. In the transmitter portion of the main base station 100, radio signals to be transmitted to distant telephone subscriber stations are present on output lead 201 of radio channel unit 200. In the receiver portion of the main base station 100, radio signals received from distant telephone subscriber stations are present on input lead 212 of radio channel unit 200. Typically, the transmission radio signals present on lead 201 have frequencies that differ from those of reception radio signals present on lead 212. In connection with cellular mobile telephone communications, a typical transmission radio frequency for outgoing signals on lead 201 is of the order of 870 MHz, while a typical reception radio frequency for incoming signals on lead 212 is of the order of 825 MHz. The frequency of the outgoing signals present on lead 201 is reduced by a frequency downconverter 202 to a frequency range of the order of the frequency band of the remote site, e.g., 106, to which such outgoing signals are intended. For purpose of illustration only, in connection with the foregoing example, the 870 MHz frequency of the outgoing radio signals may be reduced by the downconverter 202 to about 2 MHz. Next, in such case, the 2 MHz frequency-reduced signals are amplified via amplifier 203 and applied to a modulator 204 adapted to modulate the frequency-reduced signals on a microwave frequency carrier signal. The frequency of the latter may be selected from any of the normally used microwave frequency bands, e.g., the 18 GHz band. The output signals of the modulator 204 are preferably coupled to a microwave amplifier 205 prior to coupling to the microwave antenna 112 via a microwave duplexer 206. Given desired frequency ranges and bands, the downconverter 202, the amplifiers 203 and 205, the modulator 204 and the duplexer 206 can be selected from any commercially available circuits meeting desired frequency and amplification parameters.

As shown in FIG. 2, the receiver portion of the main base station 100 includes a microwave amplifier 207 coupled to the duplexer 206 and adapted to amplify incoming microwave signals received at the antenna 112. A frequency downconverter circuit 208 has an input coupled to the output of amplifier 207 so that the frequency of the incoming microwave signals received at the antenna 112 is substantially reduced to a frequency range of the order of the frequency band of a remote site, e.g., 106 or 109, from which the incoming microwave signals originate. Referring to the above-mentioned example, the output signals of the downconverter 208 may have a frequency of the order of 2 MHz. Such substantially reduced frequency signals are next amplified via amplifier 209 and applied to a modulator 210 adapted to modulate them on a radio frequency carrier signal. It may be desirable to connect a second amplifier circuit (not shown) to the output of the modulator 210 if the amplitudes of the modulated radio frequency signals, as generated by the modulator 210 and present on the lead 212, are of insufficient magnitudes for further processing by the radio channel unit 200.

Although the embodiment of FIG. 2 was described with reference to a single microwave antenna 112 and an associated duplexer 206, separate transmission and reception microwave antennas can readily be substituted for the antenna 112 thus eliminating the need for duplexer 206.

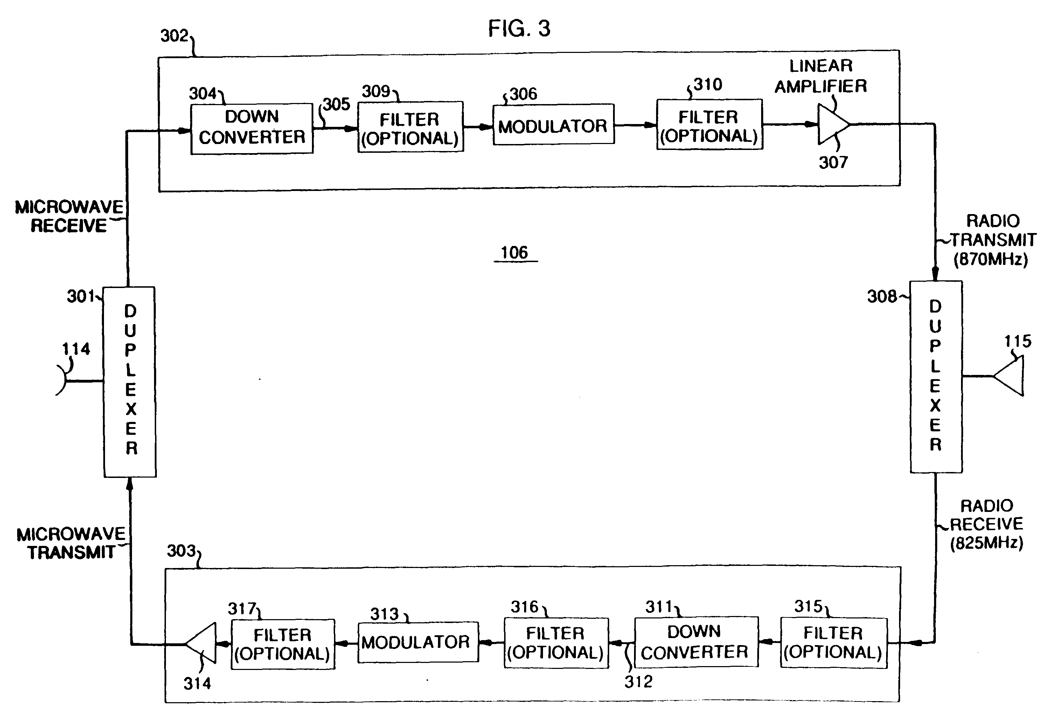

Referring now to FIG. 3, there is shown, in functional block diagram form, various circuit elements included in the remote reception and radiation site 106. As mentioned in connection with the description of the arrangement shown in FIG. 1, the microwave antenna 114 is adapted to receive and transmit microwave signals, respectively, from and to the main base station. A duplexer circuit 301, such as for example a microwave circulator of commercially available type, is connected to the antenna 114 so that the site 106 comprises two portions, namely a microwave receive/radio transmit portion 302, and a radio receive/microwave transmit portion 303 both coupled to the antenna 114. In accordance with an illustrative embodiment, the portion 302 includes a frequency downconverter 304, having an input terminal coupled to one output of the duplexer 301, for substantially reducing the frequency of the microwave signals received at the antenna 114 and generating intermediate signals, present on downconverter output lead 305. These intermediate signals are connected to a modulator circuit 306 for modulating them on a carrier radio signal having a predetermined frequency selected from the frequency band used for radio transmission of signals intended for the subscriber telephone stations served by the site 106. An amplifier circuit 307, preferably a linear amplifier, and a duplexer 308 are connected between the output of the modulator circuit 306 and the radio antenna 115. Shown in FIG. 3, are two filter circuits 309 and 310 that may be optimally inserted in the circuit of the portion 302 depending upon the frequency bands desired, respectively, for the intermediate signals and for the modulated radio signals.

As shown in FIG. 3, the other portion of the reception and radiation site 106, i.e., the radio receive/microwave transmit portion 303, includes a frequency downconverter 311 for reducing the frequency of radio signals received at the radio antenna 115, and for generating second intermediate signals on lead 312. A modulator circuit 313 is coupled to the downconverter 311 for modulating the intermediate signals present on lead 312 on a microwave frequency carrier signal. The modulated signals are coupled to the microwave antenna 114 via an amplifier 314 and the duplexer 301. Also shown in FIG. 3, are filter circuits 315, 316 and 317 that may be optionally inserted in the circuit of portion 303 depending upon the respective frequency bands desired at various points along this circuit.

The above embodiment of FIG. 3 was described with reference to a single antenna 114 and an associated duplexer 301 for implementing both the reception and transmission of microwave signals. Also, a single radio antenna 115, in association with a duplexer 308, is shown to implement both the transmission and reception of radio signals. Clearly, a transmit antenna and a receive antenna can readily be substituted for each of the antennas 114 and 115 thus rendering unnecessary their associated duplexers 301 and 308.

Although the present invention has been described in connection with particular embodiments thereof, additional embodiments, modifications and applications will be apparent to those skilled in the art.

## Claims

1. A method for providing wireless communications, via a microwave frequency carrier signal, between a main base station (100) of a type capable of being connected to a telephone network (104) and at least one remote reception and radiation site (106) of a type capable of communicating with a plurality of telephone subscriber stations (107,108) over predetermined radio frequencies, CHARACTERIZED BY reducing the frequency of radio signals, which are intended for the telephone subscriber stations, to a lower frequency range of the order of the frequency band of the remote reception and radiation site, amplifying the frequency-reduced signals, modulating the amplified signals on a microwave frequency carrier signal, amplifying the microwave frequency modulated signals, and coupling the amplified microwave signals to a microwave antenna (112) for transmission to the remote reception and radiation site.

2. Apparatus for providing wireless communications, via a microwave frequency carrier signal, between a main base station (100) of a type capable of being connected to a telephone network (104) and at least one remote reception and radiation site (106) of a type capable of communicating with a plurality of telephone subscriber stations (107,108) over predetermined radio frequencies, CHARACTERIZED IN THAT the apparatus comprises means (202) for reducing the frequency of radio signals, which are intended for the telephone subscriber stations, to a lower frequency range of the order of the frequency band of the remote reception and radiation site, means (203) for amplifying the frequency-reduced signals, means (204) for modulating the amplified signals on a microwave frequency carrier signal, means (205) for amplifying the microwave frequency modulated signals, and means (206) for coupling the amplified microwave signals to a microwave antenna (112) for transmission to the remote reception and radiation site.

3. A method as claimed in claim 1, comprising receiving at the remote reception and radiation site incoming microwave signals, reducing the frequencies of the received microwave signals to substantially lower frequencies thereby generating intermediate signals, modulating the intermediate signals on a carrier signal having a frequency selected from the predetermined radio frequencies, and coupling the modulated radio signals to a radio frequency antenna (115).

4. Apparatus as claimed in claim 2, comprising means (114) for receiving at the remote reception and radiation site incoming microwave signals, means (304) for reducing the frequencies of the received microwave signals to substantially lower frequencies thereby generating intermediate signals, means (306) for modulating the intermediate signals on a carrier signal having a frequency selected from the predetermined radio frequencies, and means (308) for coupling the modulated radio signals to a radio frequency antenna (115).

5. A method as claimed in claim 1, comprising receiving at a microwave antenna (112) of the main base station incoming microwave signals from the remote reception and radiation site, amplifying the received microwave signals, reducing the frequency of the amplified signals to a substantially lower frequency range of the order of the frequency band of the remote reception and radiation site, amplifying the frequency reduced signals, modulating the amplified frequency-reduced signals on a radio frequency carrier signal to generate radio frequency signals, and coupling the generated radio frequency signal to receiving means (200) within the main base station.

6. Apparatus as claimed in claim 2, comprising apparatus for receiving wireless communication signals at the main base station, comprising means for receiving at a microwave antenna (112) of the main base station incoming microwave signals, means (207) for amplifying the received microwave signals, means (208) for reducing the frequency of the amplified signals to a substantially lower frequency range of the order of the frequency band of the remote reception and radiation site, means (209) for amplifying the frequency reduced signals, means (210) for modulating the amplified frequency-reduced signals on a radio frequency carrier signal to generate radio frequency signals, and means for coupling the generated radio frequency signal to receiving means (200) within the main base station.

## Patentansprüche

1. Verfahren zur drahtlosen Kommunikation über ein Trägersignal mit Mikrowellenfrequenz zwischen einer Hauptfeststation (100) einer Art, die mit einem Fernsprechnetz (104) verbunden werden kann, und mindestens einem entfernten Empfangs- und Ausstrahlungsort (106) einer Art, die mit einer Mehrzahl von Fernsprech-Teilnehmerstationen (107, 108) über vorbestimmte Funkfrequenzen kommunizieren kann, gekennzeichnet durch Herabsetzen der Frequenz von Funksignalen, die für die Fernsprech-Teilnehmerstationen bestimmt sind, in einen niedrigeren Frequenzbereich von der Größenordnung des Frequenzbands des entfernten Empfangs- und Ausstrahlungsorts, Verstärken der frequenzreduzierten Signale, Aufmodulieren der verstärkten Signale auf ein Trägersignal mit Mikrowellenfrequenz, Verstärken der mikrowellenfrequenzmodulierten Signale und Ankoppeln der verstärkten Mikrowellensignale an eine Mikrowellenantenne (112) zur Übertragung zum entfernten Empfangs- und Ausstrahlungsort.

2. Vorrichtung zur drahtlosen Kommunikation über ein Trägersignal mit Mikrowellenfrequenz zwischen einer Hauptfeststation (100) einer Art, die mit einem Fernsprechnetz (104) verbunden werden kann, und mindestens einem entfernten Empfangs- und Ausstrahlungsort (106) einer Art, die mit einer Mehrzahl von Fernsprech-Teilnehmerstationen (107, 108) über vorbestimmte Funkfrequenzen kommunizieren kann, dadurch gekennzeichnet, daß die Vorrichtung Mittel (202) zum Herabsetzen der Frequenz von Funksignalen, die für die Fernsprech-Teilnehmerstationen bestimmt sind, auf einen niedrigeren Frequenzbereich von der Größenordnung des Frequenzbands des entfernten Empfangs- und Ausstrahlungsorts, Mittel (203) zum Verstärken der frequenzreduzierten Signale, Mittel (204) zum Aufmodulieren der verstärkten Signale auf ein Trägersignal mit Mikrowellenfrequenz, Mittel (205) zum Verstärken der mikrowellenfrequenzmodulierten Signale und Mittel (206) zum Ankoppeln der verstärkten Mikrowellensignale an eine Mikrowellenantenne (112) zur Übertragung zum entfernten Empfangs- und Ausstrahlungsort umfaßt.

3. Verfahren nach Anspruch 1, mit folgenden Schritten: Empfangen von ankommenden Mikrowellensignalen am entfernten Empfangs- und Ausstrahlungsort, Herabsetzen der Frequenzen der empfangenen Mikrowellensignale auf wesentlich niedrigere Frequenzen und dadurch Erzeugen von Zwischensignalen, Aufmodulieren der Zwischensignale auf ein Trägersignal mit einer aus den vorbestimmten Funkfrequenzen ausgewählten Frequenz und Ankoppeln der modulierten Funksignale an eine Hochfrequenzantenne (115).

4. Vorrichtung nach Anspruch 2, mit Mitteln (114) zum Empfangen von ankommenden Mikrowellensignalen am entfernten Empfangs- und Ausstrahlungsort, Mitteln (304) zum Herabsetzen der Frequenzen der empfangenen Mikrowellensignale auf wesentlich niedrigere Frequenzen und dadurch Erzeugen von Zwischensignalen, Mitteln (306) zum Aufmodulieren der Zwischensignale auf ein Trägersignal mit einer aus den vorbestimmten Funkfrequenzen ausgewählten Frequenz und Mitteln (308) zum Ankoppeln der modulierten Funksignale an eine Hochfrequenzantenne (115).

5. Verfahren nach Anspruch 1, mit folgenden Schritten: Empfangen von ankommenden Mikrowellensignalen vom entfernten Empfangs- und Ausstrahlungsort an einer Mikrowellenantenne (112) der Hauptfeststation, Verstärken der empfangenen Mikrowellensignale, Herabsetzen der Frequenz der verstärkten Signale auf einen wesentlich niedrigeren Frequenzbereich von der Größenordnung des Frequenzbands des entfernten Empfangs- und Ausstrahlungsorts, Verstärken der frequenzreduzierten Signale, Aufmodulieren der verstärkten frequenzreduzierten Signale auf ein Hochfrequenzträgersignal zur Erzeugung von Hochfrequenzsignalen und Ankoppeln des erzeugten Hochfrequenzsignals an Empfangsmittel (200) in der Hauptfeststation.

6. Vorrichtung nach Anspruch 2, mit einer Vorrichtung zum Empfangen von drahtlosen Kommunikationssignalen an der Hauptfeststation, mit Mitteln zum Empfangen von ankommenden Mikrowellensignalen an einer Mikrowellenantenne (112) der Hauptfeststation, Mitteln (207) zum Verstärken der empfangenen Mikrowellensignale, Mitteln (208) zum Herabsetzen der Frequenz der verstärkten Signale auf einen wesentlich niedrigeren Frequenzbereich von der Größenordnung des Frequenzbands des entfernten Empfangs- und Ausstrahlungsorts, Mitteln (209) zum Verstärken der frequenzreduzierten Signale, Mitteln (210) zum Aufmodulieren der verstärkten frequenzreduzierten Signale auf ein Hochfrequenzträgersignal zur Erzeugung von Hochfrequenzsignalen und Mitteln zum Ankoppeln des erzeugten Hochfrequenzsignals an Empfangsmittel (200) in der Hauptfeststation.

## Revendications

1. Méthode pour établir des communications sans fil, par l'intermédiaire d'un signal de porteuse hyperfréquence, entre une station de base principale (100) d'un type pouvant être connecté à un réseau téléphonique (104) et au moins un site de réception et rayonnement distant (106) d'un type pouvant communiquer avec une pluralité de postes d'abonnés au téléphone (107,108) sur des fréquences radioélectriques prédéterminées, CARACTERISEE PAR la réduction de la fréquence des signaux radioélectriques, qui sont destinés aux postes des abonnés au téléphone, à une gamme de fréquences inférieures de l'ordre de la bande de fréquences du site de réception et rayonnement distant, l'amplification des signaux de fréquence réduite, la modulation des signaux amplifiés sur un signal de porteuse hyperfréquence, l'amplification des signaux hyperfréquence modulés, et le couplage des signaux hyperfréquence amplifiés à une antenne hyperfréquence (112) pour la transmission au site de réception et rayonnement distant.

2. Appareil pour établir des communications sans fil, par l'intermédiaire d'un signal de porteuse hyperfréquence, entre une station de base principale (100) d'un type pouvant être connecté à un réseau téléphonique (104) et au moins un site de réception et rayonnement distant (106) d'un type pouvant communiquer avec une pluralité de postes d'abonnés au téléphone (107,108) sur des fréquences radioélectriques prédéterminées, CARACTERISE EN CE QUE l'appareil comprend un moyen (202) pour réduire la fréquence des signaux radioélectriques, qui sont destinés aux postes des abonnés au téléphone, à une gamme de fréquences inférieures de l'ordre de la bande de fréquences du site de réception et rayonnement distant, un moyen (203) pour amplifier les signaux de fréquence réduite, un moyen (204) pour moduler les signaux amplifiés sur un signal de porteuse hyperfréquence, un moyen (205) pour amplifier les signaux hyperfréquence modulés, et un moyen (206) pour coupler les signaux hyperfréquence amplifiés à une antenne hyperfréquence (112) pour la transmission au site de réception et rayonnement distant.

3. Méthode telle que revendiquée à la revendication 1, comprenant la réception au niveau du site de réception et de rayonnement distant de signaux hyperfréquence entrants, la réduction des fréquences des signaux hyperfréquence reçus à des fréquences substantiellement inférieures générant ainsi des signaux intermédiaires, la modulation des signaux intermédiaires sur un signal de porteuse ayant une fréquence sélectionnée à partir des fréquences radioélectriques prédéterminées, et le couplage des signaux radioélectriques modulés à une antenne de fréquence radioélectrique (115).

4. Appareil tel que revendiqué à la revendication 2, comprenant un moyen (114) pour recevoir au niveau du site de réception et de rayonnement distant des signaux hyperfréquence entrants, un moyen (304) pour réduire les fréquences des signaux hyperfréquence reçus à des fréquences substantiellement inférieures générant ainsi des signaux intermédiaires, un moyen (306) pour moduler les signaux intermédiaires sur un signal de porteuse ayant une fréquence sélectionnée à partir des fréquences radioélectriques prédéterminées, et un moyen (308) pour coupler les signaux radioélectriques modulés à une antenne de fréquence radioélectrique (115).

5. Méthode telle que revendiquée à la revendication 1, comprenant la réception au niveau d'une antenne hyperfréquence (112) de la station de base principale de signaux hyperfréquence entrants provenant du site de réception et rayonnement distant, l'amplification des signaux hyperfréquence reçus, la réduction de la fréquence des signaux amplifiés à une gamme de fréquences substantiellement inférieures de l'ordre de la bande de fréquences du site de réception et rayonnement distant, l'amplification des signaux de fréquence réduite, la modulation des signaux de fréquence réduite amplifiés sur un signal de porteuse de fréquence radioélectrique pour générer des signaux de fréquence radioélectrique, et le couplage des signaux de fréquence radioélectrique générés à un moyen de réception (200) à l'intérieur de la station de base principale.

6. Appareil tel que revendiqué à la revendication 2, comprenant un appareil pour recevoir des signaux de communications sans fil au niveau de la station de base principale, comprenant un moyen pour recevoir au niveau d'une antenne hyperfréquence (112) de la station de base principale des signaux hyperfréquence entrants, un moyen (207) pour amplifier les signaux hyperfréquence reçus, un moyen (208) pour réduire la fréquence des signaux amplifiés à une gamme de fréquences substantiellement inférieures de l'ordre de la bande de fréquences du site de réception et rayonnement distant, un moyen (209) pour amplifier les signaux de fréquence réduite, un moyen (210) pour moduler les signaux de fréquence réduite amplifiés sur un signal de porteuse de fréquence radioélectrique pour générer des signaux de fréquence radioélectrique, et un moyen pour coupler les signaux de fréquence radioélectrique générés à un moyen de réception (200) à l'intérieur de la station de base principale.
